# EUROPÄISCHE PATENTSCHRIFT

(11) **EP 3 448 750 B1**
(45) Veröffentlichungstag und Bekanntmachung des Hinweises auf die Patenterteilung: **01.01.2020**
(21) Anmeldenummer: 17723241.0
(22) Anmeldetag: 28.04.2017
(51) Int. Cl.: B64C 23/06, B64C 3/50, B64C 9/02, B64C 13/30

(54) **AERODYNAMISCHER PROFILKÖRPER FÜR EIN FLUGZEUG**
AERODYNAMIC PROFILED BODY FOR AN AIRCRAFT
CORPS À PROFIL AÉRODYNAMIQUE POUR AÉRONEF

(30) Priorität: 29.04.2016 AT 503832016
(43) Veröffentlichungstag der Anmeldung: 06.03.2019
(73) Patentinhaber: FACC AG, 4910 Ried im Innkreis (AT)
(72) Erfinder: FILSEGGER, Hermann, 4910 Ried im Innkreis (AT); STEPHAN, Walter, 4910 Ried im Innkreis (AT)
(74) Vertreter: Sonn & Partner Patentanwälte
(86) Internationale Anmeldenummer: PCT/AT2017/060112
(87) Internationale Veröffentlichungsnummer: WO 2017/185121

(56) Entgegenhaltungen:
- EP-A2- 1 205 383
- FR-A1- 3 014 410
- US-A- 3 478 987
- US-A- 5 947 422
- US-A1- 2002 100 839

## Beschreibung

Die Erfindung betrifft einen aerodynamischen Profilkörper für ein Flugzeug, insbesondere Winglet, mit einem eine Profilvorderkante aufweisenden vorderen Profilelement und mit einem eine Profilhinterkante aufweisenden hinteren Profilelement, mit einer das vordere Profilelement mit dem hinteren Profilelement verbindende Verstelleinheit, mit welcher das hintere Profilelement gegenüber dem vorderen Profilelement verstellbar ist, wobei die Verstelleinheit eine mit dem vorderen Profilelement verbundene vordere Lagereinrichtung, eine mit dem hinteren Profilelement verbundene hintere Lagereinrichtung und eine die vordere Lagereinrichtung und die hintere Lagereinrichtung miteinander verbindende Kraftübertragungseinrichtung aufweist, und ein Flugzeug mit einem solchen aerodynamischen Profilkörper.

Bei Flugzeugen kommen verschiedenste aerodynamische Profilkörper zum Einsatz, welchen eine luftumströmte Außenfläche gemeinsam ist. Als aerodynamische Profilkörper ausgeführt sind beispielsweise sogenannte Winglets, seltener als Flügelendscheiben bezeichnet, welche als Anbauten an den freien Enden der Flugzeugtragflächen montiert werden. Durch Winglets wird der Luftwiderstand der Tragflächen verringert. Die Winglets sind in verschiedensten Ausführungen verfügbar.

Die Geometrie von Profilkörpern hat ebenso wie deren Gewicht wesentlichen Einfluss auf den Treibstoffverbrauch des Flugzeugs. Darüber hinaus hängt die Geräuschentwicklung des Flugzeugs von den Verwirbelungen an den Profilkörpern ab. In der Vergangenheit wurden bereits Anstrengungen unternommen, Vorkehrungen dafür zu treffen, die Geometrie der Profilkörper im Flugbetrieb anzupassen, um auf die herrschenden Flugbedingungen, insbesondere Wind und Wetter, Rücksicht nehmen zu können.

Die US 3,478,987 A zeigt Düsenklappen und kontrollierbare Mittel, um die Ablenkung eines Düsenstrahls von diesen zu verändern. Dabei wird die effektive Kontur einer aerodynamischen Oberfläche hinter einem Düsenschlitz kontrolliert variiert, so dass der Strahl entweder nach oben oder nach unten abgelenkt werden kann, um den Auftrieb zu verändern.

Die FR 3 014 410 A1 zeigt eine Schwenkvorrichtung für ein Querruder, welches an einem Flügel mit einem Gelenk verbunden ist. Das Gelenk weist flexible, elastische Platten auf, die nebeneinander gestellt sind und mit gegensätzlichen Winkeln ausgeführt sind, sodass das Querruder rotiert werden kann.

Beispielsweise wurde in der EP 1 047 593 B1 eine Flugzeugtragfläche vorgeschlagen, bei welcher sowohl an der Vorderkante als auch an der Hinterkante Einrichtungen zur Veränderung des Querschnittsprofils vorgesehen sind. Zu diesem Zweck ist ein biegsamer äußerer Rahmen vorgesehen, welcher mit einer flexiblen Außenhaut ummantelt ist. Am hinteren Abschnitt des Tragflächenprofils ist ein Aktuator vorgesehen, welcher auf eine biegsame Verbindungsstruktur wirkt. Die Verbindungsstruktur weist kompressible S-förmige Elemente auf, die mit dem biegsamen äußeren Rahmen verbunden sind. Dadurch kann das Profil der Hinterkante angepasst werden. Am vorderen Abschnitt des Tragflächenprofils ist ein weiterer Aktuator vorgesehen, mit welchem eine radiale Kraft auf eine Verbindungsstruktur ausgeübt wird, welche auf den biegsamen Rahmen übertragen wird. Somit kann auch die Geometrie der Vorderkante angepasst werden.

Nachteilig an dieser Ausführung ist jedoch, dass der äußere Rahmen insgesamt biegsam ausgeführt sein muss, um die Geometrieanpassung zu ermöglichen. Weiters ist nachteilig, dass die Anordnung eigener Aktuatoren an der Vorder- und an der Hinterkante das Gewicht des Profils wesentlich erhöht.

Die Aufgabe der vorliegenden Erfindung besteht somit darin, zumindest einzelne Nachteile des Standes der Technik zu lindern bzw. zu beseitigen. Die Erfindung setzt sich daher insbesondere zum Ziel, einen aerodynamischen Profilkörper und ein Flugzeug mit konstruktiv einfachen Mitteln zur Anpassung der Profilgeometrie im Flugbetrieb zu ertüchtigen, ohne die Profilumströmung wesentlich zu beeinträchtigen.

Diese Aufgabe wird durch einen aerodynamischen Profilkörper mit den Merkmalen von Anspruch 1 und ein Flugzeug mit den Merkmalen von Anspruch 15 gelöst.

Teil der Erfindung ist eine das vordere Profilelement mit dem hinteren Profilelement verbindende Verstelleinheit, mit welcher das hintere Profilelement gegenüber dem vorderen Profilelement verstellbar ist, wobei die Verstelleinheit eine mit dem vorderen Profilelement verbundene vordere Lagereinrichtung, eine mit dem hinteren Profilelement verbundene hintere Lagereinrichtung und eine die vordere Lagereinrichtung und die hintere Lagereinrichtung miteinander verbindende Kraftübertragungseinrichtung aufweist.

Demnach ist zwischen vorderem Profilelement und hinterem Profilelement die Verstelleinheit angeordnet, mit welcher eine Anpassung der Profilgeometrie im laufenden Flugbetrieb vorgenommen werden kann. Damit kann beispielsweise auf die momentanen Wind- und Wetterverhältnisse reagiert werden, um eine jeweils günstige Profilgeometrie einzustellen. Die Verstelleinheit ist insbesondere dazu eingerichtet, den Verlauf der Skelett- bzw. Mittellinie (englisch "chamber") des Profilkörpers anzupassen. Bei der erfindungsgemäßen Ausführung können das vordere Profilelement und das hintere Profilelement vorteilhafterweise jeweils im Wesentlichen starr ausgeführt sein. Für die Zwecke dieser Offenbarung bedeutet dies, dass das vordere und das hintere Profilelement zwar jeweils unter mechanischer Belastung gewöhnlichen elastischen Verformungen unterliegen, jedoch keine definierte Formveränderung des vorderen bzw. hinteren Profilelements zwecks Anpassung der Profilgeometrie vorgesehen ist. Demgegenüber kann die Verstelleinheit zwischen dem vorderen und dem hinteren Profilelement in der Form verändert werden, um die Anpassung der Profilgeometrie durchzuführen. Die Verstelleinheit weist dafür jeweils zumindest eine vordere Lagereinrichtung an dem vorderen Profilelement und eine hintere Lagereinrichtung an dem hinteren Profilelement auf. Zur Anpassung der Profilgeometrie kann der Winkel der hinteren Lagereinrichtung relativ zur vorderen Lagereinrichtung verändert werden. Die maximale Winkelveränderung zwischen der vorderen Lagereinrichtung und der hinteren Lagereinrichtung beträgt vorzugsweise zumindest mehrere Grad. Die Kraftübertragung zwischen dem hinteren Profilelement und dem vorderen Profilelement wird über die Kraftübertragungseinrichtung bewerkstelligt, mit welcher ein Drehmoment auf eine der Lagereinrichtungen, insbesondere auf die hintere Lagereinrichtung, ausgeübt wird.

Der aerodynamische Profilkörper ist bevorzugt ein Winglet, welches an einem Ende eines Tragflügels anordenbar ist. Die erfindungsgemäße Verstelleinheit kann jedoch ebenso bei einem Steuerflächenelement, insbesondere einem Ruder oder einem Spoiler, eingesetzt werden.

Mit Hilfe der Verstelleinheit kann die Geometrie des aerodynamischen Profilkörpers angepasst werden, wobei insbesondere eine Neigung des hinteren Profilelements relativ zum vorderen Profilelement, insbesondere um mehrere Grad, beispielsweise 10 Grad, bezüglich einer Normalstellung, eingestellt werden kann. Im Fall eines Winglets kann so auf geänderte Umweltbedingungen, beispielsweise Windstöße, durch Veränderung der Profilgeometrie reagiert werden. Vorteilhafterweise können so die Flugeigenschaften eines damit ausgestatteten Flugzeugs optimiert werden. Durch die Anpassung der Profilgeometrie des Profilkörpers kann insbesondere eine Treibstoffeinsparung erzielt werden. Je nach Anwendung kann zudem die Geräuschentwicklung im Flugbetrieb reduziert werden.

Die Kraftübertragungseinrichtung weist ein elastisch verformbares Blattfederelement auf. Die Anordnung des Blattfederelements bewirkt vorteilhafterweise eine Biegelinie zwischen dem vorderen und dem hinteren Profilelement. Dadurch kann das Querschnittsprofil im Wesentlichen stetig von der Profilvorderkante bis zur Profilhinterkante verlaufen. Eine solche Ausführung bringt wesentliche Vorteile gegenüber dem Stand der Technik mit sich, bei welchem vielfach ein Knick, d.h. ein unstetiger Übergang, zwischen beweglichem und feststehendem Profilteil vorgesehen wurde. Aufgrund der elastischen Verformung des Blattfederelements im aktivierten Zustand der Verstelleinheit wird eine Federspannung aufgebaut, welche eine hohe Biegesteifigkeit der Verbindung zwischen vorderem und hinterem Profilelement bewirkt. Vorteilhaft ist weiteres, dass die mechanischen Eigenschaften des Blattfederelements sehr präzise einstellbar sind.

Für die Zwecke dieser Offenbarung wird als Blattfederelement ein biegsames Element verstanden, dessen Ausdehnung entlang einer Hauptebene um ein Mehrfaches, insbesondere um ein Vielfaches, größer als senkrecht dazu ist.

Gemäß einer bevorzugten Ausführung weist die Verstelleinheit einen Antrieb, insbesondere einen Linearantrieb, zur Drehmomentübertragung auf die Kraftübertragungseinrichtung auf. Bevorzugt ist der Antrieb in dem vorderen Profilelement untergebracht. Als Linearantrieb kann ein hydraulischer oder pneumatischer Zylinder-Kolben-Antrieb vorgesehen sein.

Ein aerodynamischer Profilkörper mit einem Blattfederelement und einem Antrieb zur Drehmomentübertragung auf das Blattfederelement ist aus dem Stand der Technik weder bekannt noch wird dieser dadurch nahegelegt.

DE 10 2009 053126 A1 beschreibt eine Verstellvorrichtung für Stellklappen, welche an einem Flugzeugflügel verschwenkbar gelagert sind. Ein Aktuator ist über eine Antriebs-Drehwelle mit einer Antriebsvorrichtung gekoppelt, um ein Drehmoment auf die Stellklappe zu übertragen. Zur Drehmomentübertragung ist der Aktuator über eine Kopplungsvorrichtung mit einer Anschlussvorrichtung verbunden, welche wiederum mit der Stellklappe gekoppelt ist. Durch eine Rotation des Aktuators ändert sich somit der Winkel der Stellklappe bezogen auf die Tragfläche. Der Aktuator, welcher an der Tragfläche angeordnet ist, ist über ein erstes Gelenk mit der Kopplungsvorrichtung verbunden, welche wiederum über ein zweites Gelenk mit der Stellklappe bzw. der Anschlussvorrichtung verbunden ist.

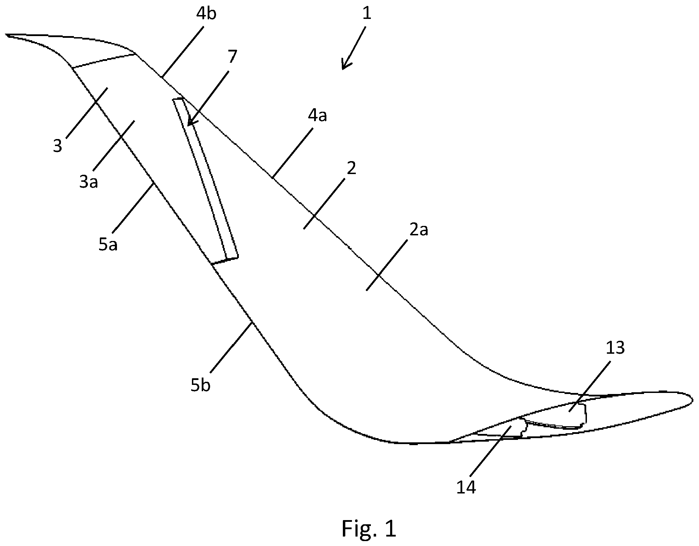

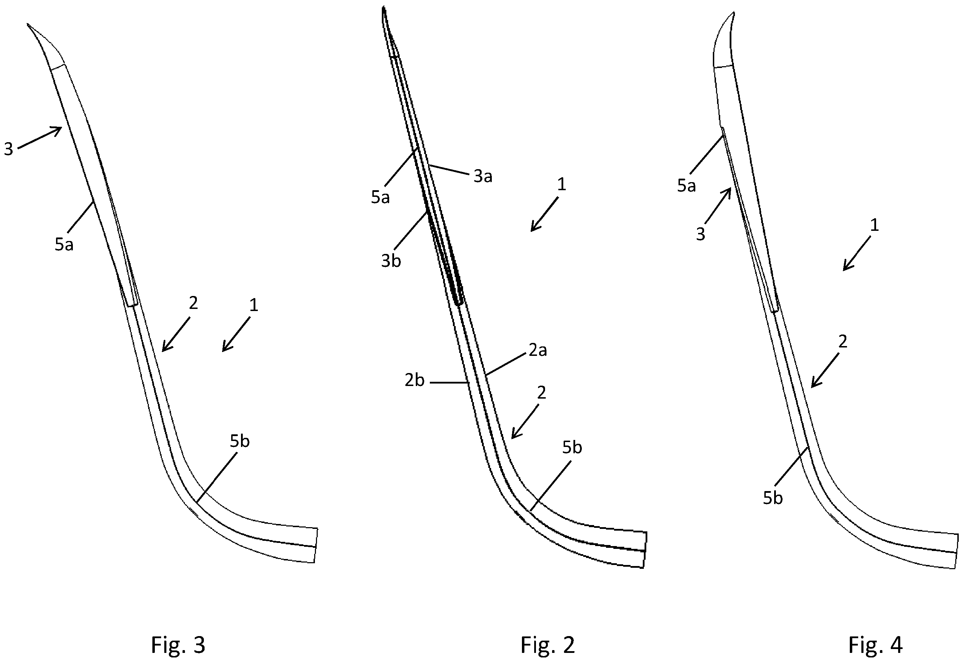

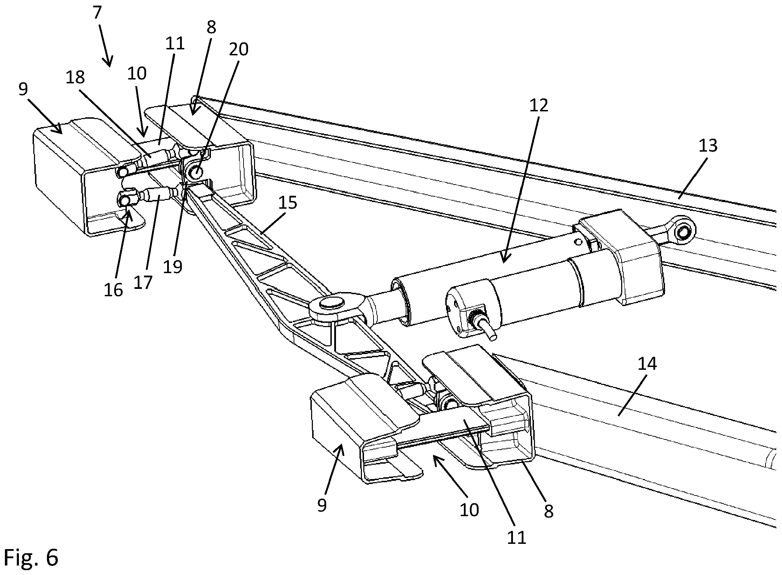

Die EP 0230681 A2 (DE 3643157 A1) beschreibt eine andersartige Vorrichtung zum Verschwenken eines Vorflügels, welcher an der Vorderkante eines Flugzeugflügels angeordnet ist. Im Wesentlichen sind für den Vorflügel drei mögliche Positionen vorgesehen: eingefahren (Fig. 1), ausgefahren (Fig. 3) sowie ausgefahren und verschwenkt (Fig. 6). Der Wechsel zwischen der ersten (Fig. 1) und der zweiten Position (Fig. 3) erfolgt durch eine Bewegung des Vorflügels entlang einer Haupttragschiene, wobei eine Drehbetätigungsanordnung diese Bewegung antreibt. Dabei wird der Vorflügel nach vorne (in Flugrichtung) und nach unten bewegt. Eine Federvorspanneinrichtung ist dazu ausgebildet, den Vorflügel in dieser Position mit Hilfe einer bestimmten Federkraft zu halten. Wird durch die angeströmte Luft die aerodynamische Kraft größer als die Federkraft, so kommt es zu einer Verschwenkung des Vorflügels, wobei sich der Vorflügel weiter nach unten neigt, wodurch die Tragfläche stärker gewölbt wird. Die Bewegung/Verschwenkung des Vorflügel erfolgt demnach in einem ersten Schritt mechanisch (Drehbetätigungsanordnung) und in einem zweiten Schritt dadurch, dass die aerodynamischen Kräfte die Federkraft der Federvorspanneinrichtung übersteigen.

Die Federvorspanneinrichtung weist geschichtete Blattfedern auf. Die Blattfedern der EP 0230681 A2 (DE 3643157 A1) sind jedoch auf einen gänzlich unterschiedlichen Zweck gerichtet, woraus sich auch zahlreiche bauliche Unterschiede ergeben. Der EP 0230681 A2 (DE 3643157 A1) fehlt jedenfalls der bei obiger Ausführungsform vorgesehene Antrieb zur Drehmomentübertragung auf die Kraftübertragungseinrichtung. Denn bei der EP 0230681 A2 (DE 3643157 A1) wird das Blattfederpaket lediglich passiv - durch die Anströmung - verformt.

Somit kann selbst eine Zusammenschau der DE 102009053126 A1 mit der EP 0230681 A2 (DE 3643157 A1) nicht zu dem obigen aerodynamischen Profilkörper führen, bei welchem ein Blattfederelement zwischen vorderer und hinterer Lagereinrichtung mittels eines Antriebs aktiv eingestellt werden kann.

Die DE 19503051 A1 offenbart einen Linearantrieb mit einem Eingangsteil und einem daran gekoppelten Ausgangsteil zum Verstellen einer Flügelklappe. Wird die Bewegung der Flügelklappe durch äußere Einflüsse blockiert und ein bestimmter Grenzwert für die an die Flügelklappe übertragene Kraft überschritten, wird das Eingangsteil von dem Ausgangsteil entkoppelt, womit die Kraftübertragung unterbrochen wird. Die DE 19503051 A1 bezieht sich demnach auf eine Art Sicherungsvorrichtung für eine Lineareinheit (als Alternative zu Drehmomentbegrenzern oder Sollbruchstellen) .

Die Verstelleinheit ist bevorzugt zur Verformung des Blattfederelements im Wesentlichen in Richtung senkrecht zur Hauptebene des Blattfederelements eingerichtet. Um die Profilgeometrie des aerodynamischen Profilkörpers an die herrschenden Umgebungsbindungen anzupassen, kann die Verstelleinheit zwischen dem vorderen und dem hinteren Profilelement betätigt werden. Durch Betätigung der Verstelleinheit wird das Blattfederelement im Wesentlichen in Richtung senkrecht zu dessen Haupterstreckungsebene aufgebogen. Im aufgebogenen Zustand des Blattfederelements wird eine im Wesentlichen gleichmäßige Kraftübertragung zwischen der vorderen und hinteren Lagereinrichtung entlang der Hauptebene des Blattfederelements erzielt.

Zur wirksamen Kraftübertragung zwischen dem vorderen und hinteren Profilelement ist es günstig, wenn das Blattfederelement in einer Normalstellung des hinteren Profilelements relativ zum vorderen Profilelement im Wesentlichen plan angeordnet ist, wobei das Blattfederelement in einer Aktivstellung des hinteren Profilelements im Wesentlichen in Richtung senkrecht zur Hauptebene des Blattfederelements aufgebogen ist.

Das Blattfederelement ist im Wesentlichen mittig zwischen einer Profiloberseite und einer Profilunterseite angeordnet. Demnach ist der Querschnitt des Blattfederelements bei dieser Ausführung im Wesentlichen entlang der Profilmittellinie, vielfach auch als Skelettlinie, Wölbungslinie oder Krümmungslinie bezeichnet, angeordnet. Durch das Blattfederelement wird eine Biegelinie zwischen dem vorderen Profilelement und dem hinteren Profilelement festgelegt. Vorteilhafterweise können mit dieser Ausführung Einsparungen beim Kerosinverbrauch und eine reduzierte Geräuschentwicklung erzielt werden.

Gemäß einer bevorzugten Ausführung ist das Blattfederelement aus faserverstärktem Kunststoff, insbesondere aus kohlenstofffaserverstärktem Kunststoff, gefertigt. Diese Ausführung zeichnet sich durch hohe Biegesteifigkeit, präzise definierten Kraftverlauf, geringen Wartungsaufwand und niedriges Gewicht aus.

Zur Einspannung des Blattfederelements an der vorderen und hinteren Lagereinrichtung ist es günstig, wenn die vordere Lagereinrichtung eine längliche Ausnehmung zur Aufnahme des einen Endes des Blattfederelements, die hintere Lagereinrichtung eine längliche Ausnehmung zur Aufnahme des anderen Endes des Blattfederelements aufweist.

Um die Kraftübertragung bei längeren Profilkörpern zu gewährleisten, sind bevorzugt zwei vordere Lagereinrichtungen an dem vorderen Profilelement und zwei hintere Lagereinrichtungen an dem hinteren Profilelement vorgesehen, wobei je eine Kraftübertragungseinrichtung zwischen den vorderen Lagereinrichtungen und den hinteren Lagereinrichtungen angeordnet ist. Je nach Ausführung kann jedoch auch eine höhere Anzahl von Kraftübertragungsstellen, mit je einer vorderen Lagereinrichtung, einer hinteren Lagereinrichtung und einer Kraftübertragungseinrichtung, vorgesehen sein.

Hinsichtlich einer konstruktiv einfachen, teilesparenden und gewichtsreduzierten Ausführung ist es günstig, wenn der Antrieb über ein Gabelelement mit den zwei Kraftübertragungseinrichtungen verbunden ist. Das Gabelelement kann mehrere Aussparungen aufweisen, um das Gewicht der Verstelleinheit zu reduzieren. Gemäß einer bevorzugten Ausführung weist die Kraftübertragungseinrichtung einen jeweils mit der vorderen Lagereinrichtung und der hinteren Lagereinrichtung verbundenen Hebelmechanismus zur Drehmomentübertragung auf die vordere oder hintere Lagereinrichtung auf. Bevorzugt wird das Drehmoment auf die hintere Lagereinrichtung übertragen, um das hintere Profilelement gegenüber dem vorderen Profilelement zu verstellen. Jedoch kann der Hebelmechanismus alternativ auch zur Drehmomentübertragung auf die vordere Lagereinrichtung ausgebildet sein. Bei beiden Ausführungen wird ein Drehmoment in den Hebelmechanismus eingeleitet, welches eine Verstellung der relativen Winkellage zwischen der hinteren Lagereinrichtung an dem hinteren Profilelement und der vorderen Lagereinrichtung an dem vorderen Profilelement bewirkt.

Zur Anpassung der Profilgeometrie des aerodynamischen Profilkörpers ist es von Vorteil, wenn der Antrieb, insbesondere über das Gabelelement, mit dem Hebelmechanismus verbunden ist.

Gemäß einer besonders bevorzugten Ausführung weist der Hebelmechanismus einen ersten Verbindungsarm und einen zweiten Verbindungsarm auf, deren eine Enden gelenkig mit der vorderen oder hinteren Lagereinrichtung verbunden sind und deren andere Enden gelenkig mit den Enden eines Lagerhebels verbunden sind, welcher gelenkig an der hinteren bzw. vorderen Lagereinrichtung gelagert ist. Je nach Ausführung ist der Lagerhebel an der vorderen oder an der hinteren Lagereinrichtung über ein ortsfestes Gelenk verschwenkbar gelagert. An den Enden des Lagerhebels sind der erste und der zweite Verbindungsarm angelenkt, welche an der gegenüberliegenden Lagereinrichtung, d.h. an der hinteren bzw. an der vorderen Lagereinrichtung, um ortsfeste Gelenke gelagert sind. Durch Betätigung der Verstelleinheit wird der Lagerhebel um dessen ortsfestes Gelenk verschwenkt, wobei die Gelenke des ersten und des zweiten Verbindungsarms an dem Lagerhebel in entgegengesetzte Richtungen verlagert werden. Je nach Schwenkrichtung des Lagerhebels wird mit dem ersten Verbindungsarm eine Druckkraft und mit dem zweiten Verbindungsarm eine Zugkraft (oder umgekehrt) auf die jeweilige Lagereinrichtung aufgebracht. Dadurch wird ein Drehmoment auf diese Lagereinrichtung aufgebracht, welches eine Veränderung der Winkelstellung des hinteren Profilelements relativ zu dem vorderen Profilelement hervorruft.

Zur Kraftübertragung auf den Hebelmechanismus ist es günstig, wenn der Antrieb, insbesondere über das Gabelelement, an der gelenkigen Verbindung zwischen dem ersten Verbindungsarm und dem Lagerhebel angreift.

Um die Übertragung eines Drehmoments zwischen der vorderen und der hinteren Lagereinrichtung zu ermöglichen, ist es günstig, wenn die gelenkige Verbindung zwischen dem Lagerhebel und der hinteren bzw. vorderen Lagereinrichtung im Wesentlichen in der Hauptebene des Blattfederelements angeordnet ist.

Um die Profilgeometrie des aerodynamischen Profilkörpers durch die Anordnung der Verstelleinheit nicht bzw. möglichst wenig zu stören, ist es vorteilhaft, wenn die Verstelleinheit ein Gehäuse aufweist, welches eine im Wesentlichen bündig mit der Profiloberseite abschließende obere Außenfläche und eine im Wesentlichen bündig mit der Profilunterseite abschließende untere Außenfläche aufweist. Das Gehäuse kann an der oberen bzw. unteren Außenfläche elastisch verformbar sein, um die Formveränderungen bei Betätigung der Verstelleinheit auszugleichen. Alternativ kann das Gehäuse mit im Wesentlichen starren Außenflächen ausgebildet sein, wobei in diesem Fall die Außenflächen unter die Profilober- bzw. -unterseite des vorderen und hinteren Profilelements gleiten können. Schließlich kann der aerodynamische Profilkörper, wie im Stand der Technik an sich bekannt, mit einer nachgiebigen, jedoch eine ausreichende Eigensteifigkeit aufweisenden Folie ummantelt sein.

Um die Reparatur bzw. Wartung des aerodynamischen Profilkörpers zu erleichtern, ist es günstig, wenn die Verstelleinheit lösbar mit dem vorderen Profilelement und dem hinteren Profilelement verbunden ist. Dies bedeutet insbesondere, dass das Gehäuse der Verstelleinheit nicht einteilig mit dem vorderen bzw. hinteren Profilelement gebildet ist. Bevorzugt ist die vordere Lagereinrichtung an der Rückseite des vorderen Profilelements montiert. Die hintere Lagereinrichtung ist an der Vorderseite des hinteren Profilelements montiert.

Die Erfindung wird nachstehend anhand eines bevorzugten Ausführungsbeispiels, auf das sie jedoch nicht beschränkt sein soll, weiter erläutert.

In der Zeichnung zeigt:
Fig. 1 eine schaubildliche Ansicht eines erfindungsgemäßen Profilkörpers in Form eines Winglets für ein Flugzeug, wobei zwischen einem vorderen Profilelement und einem hinteren Profilelement eine Verstelleinheit zur Anpassung der Profilgeometrie des Winglets angeordnet ist;
Fig. 2 eine Ansicht des Winglets in einer Normalstellung;
Fig. 3 eine Ansicht des Winglets entsprechend Fig. 2 in einer ersten Aktivstellung, in welcher das hintere Profilelement um -10° bezüglich der Normalstellung verstellt ist;
Fig. 4 eine Ansicht des Winglets entsprechend Fig. 2, 3 in einer zweiten Aktivstellung, in welcher das hintere Profilelement um +10° bezüglich der Normalstellung verschwenkt ist;
Fig. 5 eine Draufsicht auf das Winglet im Bereich der Verstelleinheit, deren Gehäuse jedoch der besseren Übersicht halber in der Darstellung weggelassen ist;
Fig. 6 eine Detailansicht der Verstelleinheit ohne Gehäuse;

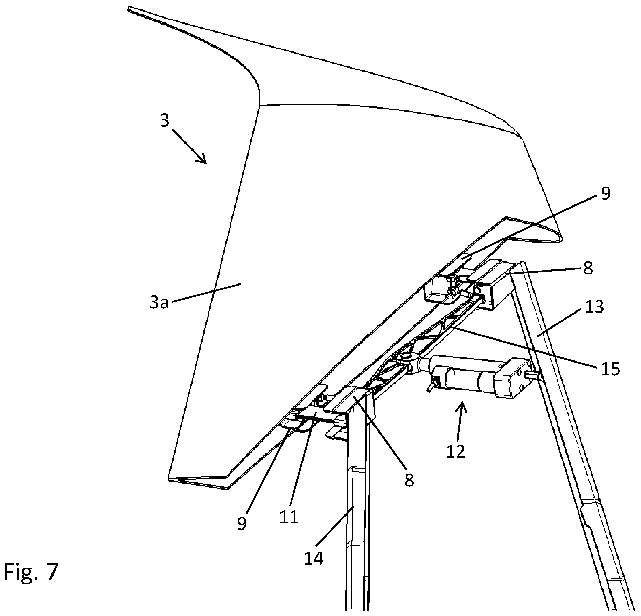

Fig. 7 eine weitere Ansicht der Verstelleinheit ohne Gehäuse im montierten Zustand an dem hinteren Profilelement;
Fig. 8 eine Querschnittsansicht des aerodynamischen Profilkörpers im Bereich der Verstelleinheit in der Normalstellung gemäß Fig. 2;
Fig. 9 eine Querschnittsansicht des aerodynamischen Profilkörpers im Bereich der Verstelleinheit in der ersten Aktivstellung gemäß Fig. 3; und
Fig. 10 eine Querschnittsansicht des aerodynamischen Profilkörpers im Bereich der Verstelleinheit in der zweiten Aktivstellung gemäß Fig. 4.

In der Zeichnung ist ein aerodynamischer Profilkörper 1 gezeigt, welcher in der dargestellten Ausführungsform als Winglet ausgebildet ist.

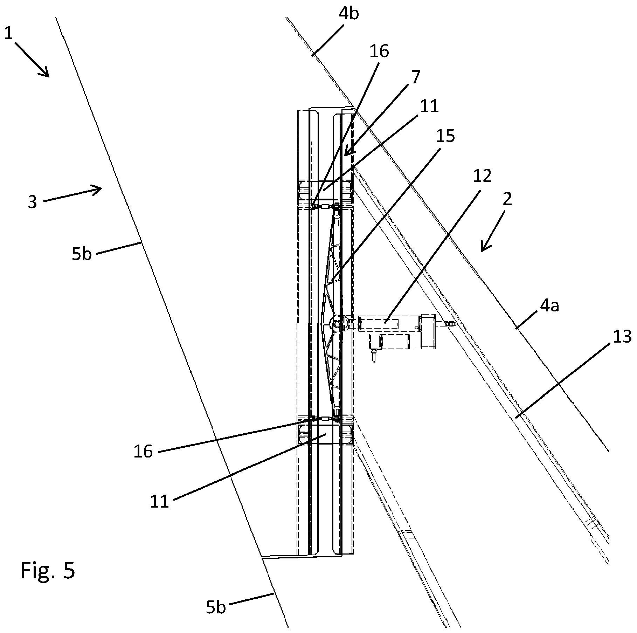

Wie aus Fig. 1 bis 5 schematisch ersichtlich, weist der Profilkörper 1 ein vorderes Profilelement 2 auf, welches im bestimmungsgemäßen Betriebszustand des Profilkörpers 1 unbeweglich an dem Flugzeug angeordnet ist. Zudem weist der Profilkörper 1 ein hinteres Profilelement 3 auf, welches im bestimmungsgemäßen Betriebszustand des Profilkörpers 1 relativ zu dem vorderen Profilelement 2 beweglich angeordnet ist. Das vordere Profilelement 2 weist eine luftumströmte vordere Profiloberseite 2a und eine vordere Profilunterseite 2b, das hintere Profilelement 3 eine luftumströmte hintere Profiloberseite 3a und eine hintere Profilunterseite 3b auf. Am vorderen Profilelement 2 ist eine Profilvorderkante 4a (Englisch: "leading edge"), am hinteren Profilelement 3 eine Profilhinterkante 5a (Englisch: "trailing edge") ausgebildet. In der gezeigten Ausführung sind das vordere 2 und hintere Profilelement 3 so angeordnet, dass das hintere Profilelement 3 eine an die Profilvorderkante 4 des vorderen Profilelements 2 anschließende weitere Profilvorderkante 4b, das vordere Profilelement 2 eine an die Profilhinterkante 5 des hinteren Profilelements 2 anschließende weitere Profilhinterkante 5b aufweist.

Wie aus Fig. 1 bis 5 weiters ersichtlich, ist zwischen dem vorderen Profilelement 2 und dem hinteren Profilelement 3 eine Verstelleinheit 7 angeordnet, mit welcher das hintere Profilelement 3 gegenüber dem vorderen Profilelement 2 verstellbar ist. Im Fall des gezeigten Winglets erstreckt sich die Verstelleinheit 7 schräg zur Profilvorderkante 4a, 4b und zur Profilhinterkante 5a, 5b, bevorzugt im Wesentlichen in Richtung senkrecht zur Hauptebene der (nicht dargestellten) Tragfläche. Die Verstelleinheit 7 weist zumindest eine mit dem vorderen Profilelement 2 verbundene vordere Lagereinrichtung 8 und eine mit dem hinteren Profilelement 3 verbundene hintere Lagereinrichtung 9 auf. Die vordere Lagereinrichtung 8 ist unbeweglich an dem vorderen Profilelement 2, die hintere Lagereinrichtung 9 ist unbeweglich an dem hinteren Profilelement 3 montiert. In der gezeigten Ausführung sind zwei vordere Lagereinrichtungen 8 an dem vorderen Profilelement 2 und zwei hintere Lagereinrichtungen 9 an dem hinteren Profilelement 3 vorgesehen, welche in Längsrichtung des Profilkörpers 1 voneinander beabstandet sind. Darüber hinaus ist jeweils eine Kraftübertragungseinrichtung 10 zwischen einer vorderen Lagereinrichtungen 8 und einer hinteren Lagereinrichtung 9 angeordnet. Die Verstelleinheit 7 ist jeweils lösbar, d.h. nicht untrennbar, mit dem vorderen Profilelement 2 und dem hinteren Profilelement 3 verbunden.

Wie aus Fig. 1 bis 5 weiters ersichtlich, weist jede Kraftübertragungseinrichtung 10 ein biegsames Blattfederelement 11 auf, welches im Wesentlichen in Richtung senkrecht zur Hauptebene des Blattfederelements 11 elastisch verformbar ist. Das Blattfederelement 11 ist im Wesentlichen mittig zwischen einer Profiloberseite und einer Profilunterseite angeordnet. Das Blattfederelement 11 ist aus faserverstärktem Kunststoff, insbesondere aus kohlenstofffaserverstärktem Kunststoff, gefertigt. Die vordere Lagereinrichtung 8 weist eine längliche Ausnehmung zur Aufnahme des einen Endes des Blattfederelements 11, die hintere Lagereinrichtung 9 eine entsprechende längliche Ausnehmung zur Aufnahme des anderen Endes des Blattfederelements 11 auf. Somit ist das Blattfederelement 11 an den Enden eingespannt. Zwischen den endseitigen Einspannungen ist das Blattfederelement 11 frei durchbiegbar.

Wie aus Fig. 1 bis 5 weiters ersichtlich, ist ein Antrieb 12, in der gezeigten Ausführung ein einzelner Zylinder-Kolben-Linearantrieb, zur Drehmomentübertragung auf die Kraftübertragungseinrichtung 10 vorgesehen. Der Antrieb 12 ist an einer ersten Halteleiste 13 montiert, an welcher zudem die eine vordere Lagereinrichtung 8 abgestützt ist. Weiters ist eine zweite Halteleiste 14 vorgesehen, an welcher die andere vordere Lagereinrichtung 8 abgestützt ist. Die eine vordere Lagereinrichtung 8 ist mit der ersten Halteleiste 13, die andere vordere Lagereinrichtung 13 mit der zweiten Halteleiste 14 verbunden. Der Antrieb 12 ist über ein starres Gabelelement 15 mit den zwei Kraftübertragungseinrichtungen 10 verbunden. In der gezeigten Ausführung greift der Antrieb 12 im Wesentlichen mittig an dem Gabelelement 15 an.

Wie aus Fig. 1 bis 5 weiters ersichtlich, weist jede Kraftübertragungseinheit 10 einen jeweils mit der vorderen Lagereinrichtung 8 und der hinteren Lagereinrichtung 9 verbundenen Hebelmechanismus 16 zur Drehmomentübertragung auf die hinteren Lagereinrichtungen 9 auf. Der Antrieb 12 ist über das Gabelelement 15 mit dem Hebelmechanismus 16 verbunden. In der gezeigten Ausführung weist der Hebelmechanismus 16 einen ersten Verbindungsarm 17 und einen zweiten Verbindungsarm 18 auf. Die einen Enden des ersten 17 und zweiten Verbindungsarms 18 sind gelenkig mit der hinteren Lagereinrichtung 9 verbunden. Die anderen Enden des ersten 17 und zweiten Verbindungsarms 18 sind gelenkig mit den Enden eines Lagerhebels 19 verbunden, welcher um ein (bezüglich der vorderen Lagereinrichtung 8) ortsfestes Gelenk 20 an der vorderen Lagereinrichtung 8 gelagert ist. Der Antrieb 12 greift an dem Gabelelement 15 an, so dass das Gabelelement 15 durch linearen Vorschub des Antriebs 12 im Wesentlichen parallel zur Hauptebene des Blattfederelementes 11 verschieblich ist. Durch die Verschiebung des Gabelelements 15 wird der damit gelenkig verbundene Lagerhebel 19 um das Gelenk 20 verschwenkt. Dadurch wird ein Kraftarm zwischen der gelenkigen Anbindung des Gabelelements 15 an dem Lagerhebel 19 und dem Gelenk 20 gebildet, wodurch die Winkellage der hinteren Lagereinrichtung 9 um einen Winkel von beispielsweise mehr als 3°, vorzugsweise mehr als 5°, besonders bevorzugt mehr als 8°, insbesondere im Wesentlichen 10°, gegenüber der vorderen Lagereinrichtung 8 verstellt wird. Hierfür ist das Gelenk 20 zwischen dem Lagerhebel 19 und der vorderen Lagereinrichtung 8 im Wesentlichen in der Hauptebene des Blattfederelements 11 angeordnet.

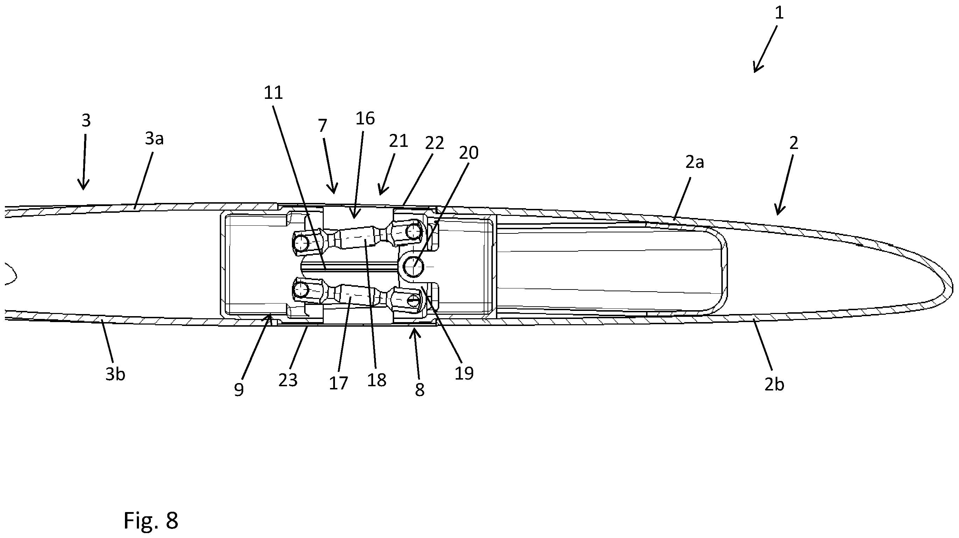

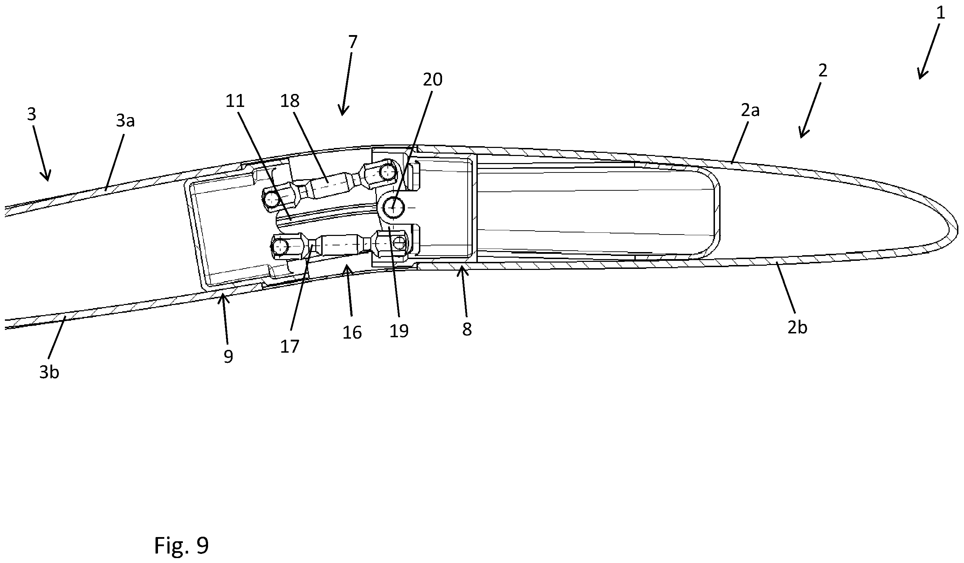

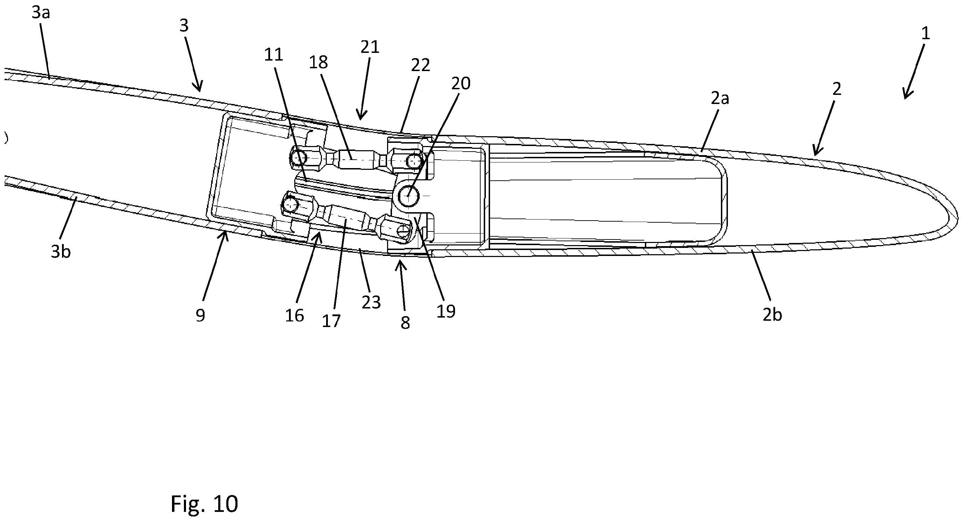

In den Fig. 8 bis 10 ist die Veränderung der Relativstellung zwischen der vorderen 8 und der hinteren Lagereinrichtung 9 ersichtlich. Gemäß Fig. 8 sind die vorderen 8 und hinteren Lagereinrichtungen 9 paarweise gegenüberliegend, im Wesentlichen parallel zueinander angeordnet. Das Blattfederelement 11 liegt in einem entspannten, planen Zustand vor, welcher der Normalstellung des hinteren Profilelements 3 relativ zum vorderen Profilelement 2 entspricht. Gemäß Fig. 9 ist die hintere Lagereinrichtung 9 um einen Winkel von im Wesentlichen 10° zur vorderen Lagereinrichtung 8 angeordnet, so dass der Profilkörper 1 in der ersten Aktivstellung vorliegt. Das Blattfederelement 11 liegt hierbei in einem in die eine Richtung senkrecht zur Hauptebene des Blattfederelements 11 aufgebogenen Zustand vor. Gemäß Fig. 10 ist die hintere Lagereinrichtung 9 um einen Winkel von ebenfalls 10° bezogen auf die andere Richtung zur vorderen Lagereinrichtung 8 angeordnet, so dass der Profilkörper 1 in der zweiten Aktivstellung vorliegt. Das Blattfederelement 11 liegt hierbei in einem in die andere Richtung senkrecht zur Hauptebene des Blattfederelements 11 aufgebogenen Zustand vor.

Wie in Fig. 8 bis 10 schematisch ersichtlich, weist die Verstelleinheit 7 ein Gehäuse 21 auf, welches eine im Wesentlichen bündig mit der Profiloberseite abschließende obere Außenfläche 22 und eine im Wesentlichen bündig mit der Profilunterseite abschließende untere Außenfläche 23 aufweist.

Die Orts- und Richtungsangaben, wie "oben", "unten", "nach oben", "nach unten", beziehen sich hierbei auf den eingebauten Betriebszustand des aerodynamischen Profilkörpers 1, wenn die Luftströmung von der Profilvorderkante 4a, 4b zur Profilhinterkante 5a, 5b geleitet wird.

## Patentansprüche

1. Aerodynamischer Profilkörper (1) für ein Flugzeug, insbesondere Winglet, mit einem eine Profilvorderkante (4a) aufweisenden vorderen Profilelement (2) und mit einem eine Profilhinterkante (3a) aufweisenden hinteren Profilelement (3), mit einer das vordere Profilelement (2) mit dem hinteren Profilelement (3) verbindende Verstelleinheit (7), mit welcher das hintere Profilelement (3) gegenüber dem vorderen Profilelement (2) verstellbar ist, wobei die Verstelleinheit (7) eine mit dem vorderen Profilelement (2) verbundene vordere Lagereinrichtung (8), eine mit dem hinteren Profilelement (3) verbundene hintere Lagereinrichtung (9) und eine die vordere Lagereinrichtung (8) und die hintere Lagereinrichtung (9) miteinander verbindende Kraftübertragungseinrichtung (10) aufweist, wobei die Kraftübertragungseinrichtung (10) ein elastisch verformbares Blattfederelement (11) aufweist, wobei die Verstelleinheit (7) einen Antrieb zur Drehmomentübertragung auf das elastisch verformbare Blattfederelement (11) aufweist, **dadurch gekennzeichnet, dass** das Blattfederelement (11) im Wesentlichen mittig zwischen einer Profiloberseite (2a; 3a) und einer Profilunterseite (2b; 3b) angeordnet ist.

2. Aerodynamischer Profilkörper (1) nach Anspruch 1, **dadurch gekennzeichnet, dass** die Verstelleinheit (7) zur Verformung des Blattfederelements (11) im Wesentlichen in Richtung senkrecht zur Hauptebene des Blattfederelements (11) eingerichtet ist.

3. Aerodynamischer Profilkörper (1) nach Anspruch 2, **dadurch gekennzeichnet, dass** das Blattfederelement (11) in einer Normalstellung des hinteren Profilelements (3) relativ zum vorderen Profilelement (2) im Wesentlichen plan angeordnet ist, wobei das Blattfederelement (11) in einer Aktivstellung des hinteren Profilelements (3) im Wesentlichen in Richtung senkrecht zur Hauptebene des Blattfederelements (11) aufgebogen ist.

4. Aerodynamischer Profilkörper (1) nach einem der Ansprüche 1 bis 3, **dadurch gekennzeichnet, dass** das Blattfederelement (11) aus faserverstärktem Kunststoff, insbesondere aus kohlenstofffaserverstärktem Kunststoff, gefertigt ist.

5. Aerodynamischer Profilkörper (1) nach einem der Ansprüche 1 bis 4, **dadurch gekennzeichnet, dass** die vordere Lagereinrichtung (8) eine längliche Ausnehmung zur Aufnahme des einen Endes des Blattfederelements (11), die hintere Lagereinrichtung (9) eine längliche Ausnehmung zur Aufnahme des anderen Endes des Blattfederelements (11) aufweist.

6. Aerodynamischer Profilkörper (1) nach einem der Ansprüche 1 bis 5, **dadurch gekennzeichnet, dass** als Antrieb zur Drehmomentübertragung auf die Kraftübertragungseinrichtung (10) ein Linearantrieb vorgesehen ist.

7. Aerodynamischer Profilkörper (1) nach einem der Ansprüche 1 bis 6, **dadurch gekennzeichnet, dass** zwei vordere Lagereinrichtungen (8) an dem vorderen Profilelement (2) und zwei hintere Lagereinrichtungen (9) an dem hinteren Profilelement (3) vorgesehen sind, wobei je eine Kraftübertragungseinrichtung (10) zwischen den vorderen Lagereinrichtungen (8) und den hinteren Lagereinrichtungen (9) angeordnet ist, wobei bevorzugt der Antrieb (12) über ein Gabelelement (15) mit den zwei Kraftübertragungseinrichtungen (10) verbunden ist.

8. Aerodynamischer Profilkörper (1) nach einem der Ansprüche 1 bis 7, **dadurch gekennzeichnet, dass** die Kraftübertragungseinrichtung (10) einen jeweils mit der vorderen Lagereinrichtung (8) und der hinteren Lagereinrichtung (9) verbundenen Hebelmechanismus (16) zur Drehmomentübertragung auf die vordere (8) oder hintere Lagereinrichtung (9) aufweist.

9. Aerodynamischer Profilkörper nach Anspruch 8, **dadurch gekennzeichnet, dass** der Antrieb (12), insbesondere über das Gabelelement (15), mit dem Hebelmechanismus (16) verbunden ist.

10. Aerodynamischer Profilkörper (1) nach Anspruch 8 oder 9, **dadurch gekennzeichnet, dass** der Hebelmechanismus (16) einen ersten Verbindungsarm (17) und einen zweiten Verbindungsarm (18) aufweist, deren eine Enden gelenkig mit der vorderen (8) oder hinteren Lagereinrichtung (9) verbunden sind und deren andere Enden gelenkig mit den Enden eines Lagerhebels (19) verbunden sind, welcher gelenkig an der hinteren (9) bzw. vorderen Lagereinrichtung (8) gelagert ist.

11. Aerodynamischer Profilkörper (1) nach Anspruch 10, **dadurch gekennzeichnet, dass** der Antrieb (12), insbesondere über das Gabelelement (15), an der gelenkigen Verbindung zwischen dem ersten Verbindungsarm (17) und dem Lagerhebel (19) angreift.

12. Aerodynamischer Profilkörper (1) nach Anspruch 10 oder 11, **dadurch gekennzeichnet, dass** die gelenkige Verbindung zwischen dem Lagerhebel (19) und der hinteren (9) bzw. vorderen Lagereinrichtung (8) im Wesentlichen in der Hauptebene des Blattfederelements (11) angeordnet ist.

13. Aerodynamischer Profilkörper (1) nach einem der Ansprüche 1 bis 12, **dadurch gekennzeichnet, dass** die Verstelleinheit (7) ein Gehäuse (21) aufweist, welches eine im Wesentlichen bündig mit der Profiloberseite (2a; 2b) abschließende obere Außenfläche (22) und eine im Wesentlichen bündig mit der Profilunterseite (2b; 3b) abschließende untere Außenfläche (23) aufweist.

14. Aerodynamischer Profilkörper (1) nach einem der Ansprüche 1 bis 13, **dadurch gekennzeichnet, dass** die Verstelleinheit (7) lösbar mit dem vorderen Profilelement (2) und dem hinteren Profilelement (3) verbunden ist.

15. Flugzeug mit einem aerodynamischen Profilkörper (1) nach einem der Ansprüche 1 bis 14.

## Claims

1. Aerodynamic profiled body (1) for an aircraft, particularly a winglet, comprising a front profiled element (2) having a profile leading edge (4a) and a rear profiled element (3) having a profile trailing edge (3a), comprising an adjusting unit (7) that connects the front profiled element (2) to the rear profiled element (3) and by means of which the rear profiled element (3) is adjustable relative to the front profiled element (2), the adjusting unit (7) comprising a front mounting device (8) that is connected to the front profiled element (2), a rear mounting device (9) that is connected to the rear profiled element (3) and a force-transmitting device (10) that connects the front mounting device (8) and the rear mounting device (9) to one another, the force-transmitting device (10) comprising an elastically deformable leaf spring element (11), the adjusting unit (7) comprising a drive for transmitting a torque to the elastically deformable leaf spring element (11), **characterised in that** the leaf spring element (11) is arranged substantially centrally between a profile upper side (2a; 3a) and a profile underside (2b; 3b).

2. Aerodynamic profiled body (1) according to claim 1, **characterised in that** the adjusting unit (7) is capable of deforming the leaf spring element (11) in a direction substantially perpendicular to the principal plane of the leaf spring element (11).

3. Aerodynamic profiled body (1) according to claim 2, **characterised in that** the leaf spring element (11) is substantially arranged plane relative to the front profiled element (2) in a normal position of the rear profiled element (3), the leaf spring element (11) being substantially bent open in a direction perpendicular to the principal plane of the leaf spring element (11) in an active position of the rear profiled element (3).

4. Aerodynamic profiled body (1) according to any of claims 1 to 3, **characterised in that** the leaf spring element (11) is made of fibre-reinforced plastics material, particularly of carbon fibre-reinforced plastics material.

5. Aerodynamic profiled body (1) according to any of claims 1 to 4, **characterised in that** the front mounting device (8) comprises an elongate recess for receiving one end of the leaf spring element (11), and the rear mounting device (9) comprises an elongate recess for receiving the other end of the leaf spring element (11).

6. Aerodynamic profiled body (1) according to any of claims 1 to 5, **characterised in that** a drive in the form of a linear drive is provided for transmitting a torque to the force-transmitting device (10).

7. Aerodynamic profiled body (1) according to any of claims 1 to 6, **characterised in that** two front mounting devices (8) are provided on the front profiled element (2) and two rear mounting devices (9) are provided on the rear profiled element (3), a force-transmitting device (10) being respectively arranged between each front mounting device (8) and rear mounting device (9), the drive (12) preferably being connected to the two force-transmitting devices (10) by means of a fork element (15).

8. Aerodynamic profiled body (1) according to any of claims 1 to 7, **characterised in that** the force-transmitting device (10) comprises a lever mechanism (16), which is respectively connected to the front mounting device (8) and the rear mounting device (9), for transmitting a torque to the front mounting device (8) or the rear mounting device (9).

9. Aerodynamic profiled body (1) according to claim 8, **characterised in that** the drive (12) is connected to the lever mechanism (16), in particular by means of the fork element (15).

10. Aerodynamic profiled body (1) according to either claim 8 or claim 9, **characterised in that** the lever mechanism (16) comprises a first connecting arm (17) and a second connecting arm (18), the first ends of which are connected to the front mounting device (8) or rear mounting device (9) in an articulated fashion and the other ends of which are connected to the ends of a bearing lever (19) in an articulated fashion, said bearing lever being respectively mounted on the rear mounting device (9) or the front mounting device (8) in an articulated fashion.

11. Aerodynamic profiled body (1) according to claim 10, **characterised in that** the drive (12) engages on the articulated connection between the first connecting arm (17) and the bearing lever (19), in particular by means of the fork element (15).

12. Aerodynamic profiled body (1) according to either claim 10 or claim 11, **characterised in that** the respective articulated connection between the bearing lever (19) and the rear mounting device (9) or the front mounting device (8) is substantially arranged in the principal plane of the leaf spring element (11).

13. Aerodynamic profiled body (1) according to any of claims 1 to 12, **characterised in that** the adjusting unit (7) comprises a housing (21) having an upper outside surface (22) that substantially ends flush with the profile upper side (2a; 2b) and a lower outside surface (23) that substantially ends flush with the profile underside (2b; 3b).

14. Aerodynamic profiled body (1) according to any of claims 1 to 13, **characterised in that** the adjusting unit (7) is separably connected to the front profiled element (2) and the rear profiled element (3).

15. Aircraft comprising an aerodynamic profiled body (1) according to any of claims 1 to 14.

## Revendications

1. Corps profilé aérodynamique (1) pour un avion, plus particulièrement une ailette, avec un élément de profilé avant (2) comprenant une arête avant de profilé (4a) et avec un élément de profilé arrière (3) comprenant une arête arrière de profilé (3a), avec une unité de réglage (7) reliant l'élément de profilé avant (2) avec l'élément de profilé arrière (3), avec laquelle l'élément de profilé arrière (3) peut être réglé par rapport à l'élément de profilé avant (2), l'unité de réglage (7) comprenant un dispositif de palier avant (8) relié avec l'élément de profilé avant (2), un dispositif de palier arrière (3) relié avec l'élément de profilé arrière (3) et un dispositif de transmission de force (10) reliant entre eux le dispositif de palier avant (8) et le dispositif de palier arrière (9), le dispositif de transmission de force (10) comprenant un élément de ressort à lames (11) déformable élastiquement, l'unité de réglage (7) comprenant un entraînement pour la transmission des couples à l'élément de ressort à lames (11) déformable élastiquement, **caractérisé en ce que** l'élément de ressort à lames (11) est disposé globalement au centre entre un côté supérieur de profilé (2a ; 3a) et un côté inférieur de profilé (2b ; 3b).

2. Corps profilé aérodynamique (1) selon la revendication 1, **caractérisé en ce que** l'unité de réglage (7) est conçue pour la déformation de l'élément de ressort à lames (11) globalement dans une direction perpendiculaire au plan principal de l'élément de ressort à lames (11).

3. Corps profilé aérodynamique (1) selon la revendication 2, **caractérisé en ce que** l'élément de ressort à lames (11) est disposé, dans une position normale de l'élément de profilé arrière (3) de manière globalement plane par rapport à l'élément de profilé avant (2), l'élément de ressort à lames (11) étant courbé, dans une position active de l'élément de profilé arrière (3), globalement dans une direction perpendiculaire au plan principal de l'élément de ressort à lames (11).

4. Corps profilé aérodynamique (1) selon l'une des revendications 1 à 3, **caractérisé en ce que** l'élément de ressort à lames (11) est constitué d'une matière plastique renforcée par des fibres, plus particulièrement d'une matière plastique renforcée par des fibres de carbone.

5. Corps profilé aérodynamique (1) selon l'une des revendications 1 à 4, **caractérisé en ce que** le dispositif de palier (8) comprend un évidement allongé pour le logement d'une extrémité de l'élément de ressort à lames (11), le dispositif de palier arrière (9) comprend un évidement allongé pour le logement de l'autre extrémité de l'élément de ressort à lames (11).

6. Corps profilé aérodynamique (1) selon l'une des revendications 1 à 5, **caractérisé en ce que**, en tant qu'entraînement pour la transmission des couples vers le dispositif de transmission de force (10), un entraînement linéaire est prévu.

7. Corps profilé aérodynamique (1) selon l'une des revendications 1 à 6, **caractérisé en ce que** deux dispositifs de palier avant (8) sont prévus sur l'élément de profilé avant (2) et deux dispositifs de palier arrière (9) sont prévus sur l'élément de profilé arrière (3), un dispositif de transmission de force (10) étant disposé entre chacun des dispositifs de palier avant (8) et chacun des dispositifs de palier arrière (9), de préférence l'entraînement (12) étant relié par l'intermédiaire d'un élément à fourche (15) avec les deux dispositifs de transmission de force (10).

8. Corps profilé aérodynamique (1) selon l'une des revendications 1 à 7, **caractérisé en ce que** les dispositifs de transmission de force (10) comprennent chacun un mécanisme à levier (16), relié avec le dispositif de palier avant (8) et le dispositif de palier arrière (9), pour la transmission des couples vers le dispositif de palier avant (8) ou le dispositif de palier arrière (9).

9. Corps profilé aérodynamique (1) selon la revendication 8, **caractérisé en ce que** l'entraînement (12) est relié avec le mécanisme à levier (16), plus particulièrement par l'intermédiaire de l'élément à fourche (15).

10. Corps profilé aérodynamique (1) selon la revendication 8 ou 9, **caractérisé en ce que** le mécanisme à levier (16) comprend un premier bras de liaison (17) et un deuxième bras de liaison (18) dont des extrémités sont reliées de manière articulée avec le dispositif de palier avant (8) ou le dispositif de palier arrière (9) et dont les autres extrémités sont reliées de manière articulée avec les extrémités d'un levier de palier (19), qui est logé de manière articulée au niveau respectivement du dispositif de palier arrière (9) ou du dispositif de palier avant (8).

11. Corps profilé aérodynamique (1) selon la revendication 10, **caractérisé en ce que** l'entraînement (12) agit sur la liaison articulée entre le premier bras de liaison (17) et le levier de palier (19), plus particulièrement par l'intermédiaire de l'élément à fourche (15).

12. Corps profilé aérodynamique (1) selon la revendication 10 ou 11, **caractérisé en ce que** la liaison articulée entre le levier de palier (19) et respectivement le dispositif de palier arrière (9) ou le dispositif de palier avant (8) est disposée globalement dans le plan principal de l'élément de ressort à lames (11).

13. Corps profilé aérodynamique (1) selon l'une des revendications 1 à 12, **caractérisé en ce que** l'unité de réglage (7) comprend un boîtier (21) qui comprend une surface externe supérieure (22) se terminant globalement en affleurement avec le côté supérieur du profilé (2a ; 2b) et une surface externe inférieure (23) se terminant globalement en affleurement avec le côté inférieur du profilé (2b ; 3b).

14. Corps profilé aérodynamique (1) selon l'une des revendications 1 à 13, **caractérisé en ce que** l'unité de réglage (7) est reliée de manière amovible avec l'élément de profilé avant (2) et l'élément de profilé arrière (3).

15. Avion avec un corps profilé aérodynamique (1) selon l'une des revendications 1 à 14.
